# NEW EUROPEAN PATENT SPECIFICATION

(11) **EP 0 511 860 B2**
(45) Date of publication and mention of the opposition decision: **05.09.2001**
(45) Mention of the grant of the patent: 17.07.1996
(21) Application number: 92303902.8
(22) Date of filing: 30.04.1992
(51) Int. Cl.: C09D 4/00, C09D 4/06, C09D 163/10

(54) **Photocurable compositions**
Lichthärtbare Zusammensetzung
Compositions photodurcissables

(30) Priority: 30.04.1991 GB 9109299; 24.05.1991 GB 9111294
(43) Date of publication of application: 04.11.1992
(73) Proprietor: SERICOL LIMITED, Broadstairs, Kent CT10 2PA (GB)
(72) Inventor: Pocock, Stephen John, Ramsgate, Kent (GB); Owen, Timothy Geoffrey, Broadstairs, Kent (GB)
(74) Representative: Wright, Robert Gordon McRae

(56) References cited:
- EP-A- 0 360 869
- EP-A- 0 438 628
- EP-A- 0 447 115
- EP-A- 0 455 343
- WO-A-91/11466
- DE-A- 2 628 408
- DE-A- 2 658 935
- FR-A- 2 246 600
- WORLD PATENTS INDEX LATEST Week 9202, Derwent Publications Ltd., London, GB; AN 92-068345 & JP-A-4 011 609
- RadTech Europe '89, 9-11 October 1989: proceedings pp. 523-533
- RadTech Europe '90-North America, 25-29 March 1990: proceedings vol. 1 pp. 402-409

## Description

This invention concerns photocurable varnisches, lacquers or inks, for example for decorating polyolefin substrates. Hitherto proposed compositions for decorating polyolefin substrates, for example 3-dimensional containers and labels, include:-
(1) mixtures of epoxy resins, derived from the reaction of bisphenol A and epichlorhydrin, with secondary resins, such as cellulose nitrate, flow control agents and colorants in a solvent, the solvent being evaporated to dry the compositions,
(2) mixtures of epoxyacrylates and a source of free radicals dispersed in multifunctional acrylate monomers together with other resins, such as polymers and/or copolymers of ethylenically unsaturated monomers, fillers, colorants and flow agents, the compositions being curable free radically by exposure to ultraviolet radiation; and
(3) mixtures of epoxy resins as used for type (1) compositions with a Bronsted acid generating catalyst, dispersed in low-viscosity epoxy diluents, together with fillers, colorants and flow agents, curing being effected cationically following exposure of the composition to ultraviolet radiation.

Finished, dry coatings produced from compositions of type (1) are produced quickly, and they often have good resistance to attack by a variety of fluids, for example alcohols, acids and alkaline solutions. Containers coated with such compositions are frequently used to store such fluids. However, the necessary evaporation of the solvent from compositions of type (1) can pose environmental problems.

Coatings produced from compositions of type (2) demonstrate fast curing and good resistance to the above-mentioned fluids. However, these compositions usually include a vinyl-pyrrolidone derivative (e.g. N-vinyl-2-pyrrolidone), such derivatives acting as solubilisers and imparting viscosity reduction, combined with promoting physical adhesion and final film cross-link density without undue embrittlement. However, vinyl-pyrrolidone derivatives have recently come under scrutiny on health grounds, and the use of such derivatives in commercially available coatings, e.g. for decoration using screen printing, has therefore become less desirable Replacements for vinyl-pyrrolidone derivatives are difficult to find in view of their special properties.

The chemical resistance of coatings produced from compositions of type (3) are usually excellent. However, achieving a fully crosslinked coating by ionically initiated polymerisation takes longer than with free radical initiated polymerisation. More recently, mono-, di- and tri-functional vinyl-ether diluents have been found to increase the effective cure speed of compositions of type (3), but an additional heat treatment is still often required in order to achieve commercial production speeds.

Although vinyl-ethers often impart to cationically cured coatings properties which are similar to those imparted by vinyl-pyrrolidone derivatives in free radically curable coatings, vinyl-ethers do not in general take part in free radical initiated reactions. As a result they would not be expected to provide an improvement to compositions of type (2). According to the present invention there is provided a photocurable varnish, lacquer or ink comprising:-
(a) a photopolymerisable binder comprising a polymerisable aromatic epoxy acrylate resin, a mono- or multi-functional acrylate monomer, and from 3-30% by weight of the photopolymerisable binder of a vinyl ether monomer; and
(b) a free radical photoinitiator; with the proviso that the photocurable varnish, lacquer or ink does not include Methyldiethanolamine.

Surprisingly, photocure compositions in accordance with the present invention have provided tough, flexible, chemically resistant coatings with good adhesion to polyolefin substrates.

The aromatic epoxy acrylate resin is preferably an acrylic acid modified epoxy resin, for example derived from a. bisphenol or a novolac. Particularly preferred aromatic epoxy acrylate resins for use in accordance with the invention are acrylic acid extended epoxy modified 2,2'-bis-(p-hydroxyphenyl)propanes (Bisphenol A) of the formula 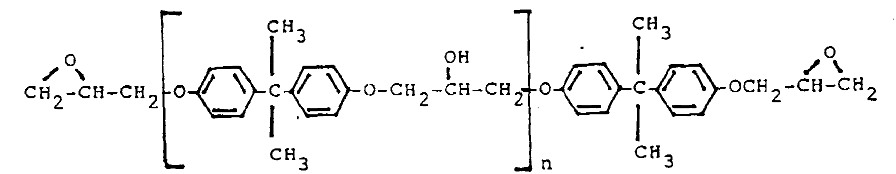 (where n is zero or an integer from 1 to 10), the acrylic acid preferably being reacted in an amount sufficient to produce a major amount of acrylic end groups in the extended product.

The photopolymerisable binder preferably represents from 30 to 70 percent by weight of the composition.

The mono- and/or multi-, e.g. di-, tri- or tetra-, functional acrylate monomer generally serves to reduce the viscosity of the varnish lacquer or ink imparted by the presence of the epoxy resin. Examples of monomers which can be used include straight and branched chain alkyl acrylates, e.g. iso-bomyl acrylate, iso-decyl acrylate, octadecyl acrylate, lauryl acrylate, stearyl acrylate and hexanediol diacrylate; polyether diacrylates, e.g. polyethylene glycol diacrylates (e.g. with four ethyleneoxy groups), for example alkyleneoxy diacrylates, e.g. tri-ethylene glycol diacrylate, tri-propylene glycol diacrylate and propoxylated neo-pentyl glycol diacrylate; and acrylates of triols and alkoxy extended triols, for example tri-methylol propane triacrylate, ethoxylated tri-methylol propane triacrylate. The mono- and/or multifunctional acrylate monomer is preferably present in an amount of from 20 to 60 percent of the photopolymerisable binder.

The vinyl-ether is present in an amount of from 3 to 30 percent by weight of the photopolymerisable binder. Typically the vinyl-ether will have a boiling point of from 110 to 200°C, examples of such ethers being 1,4-cyclohexane dimethanol di-vinyl ether, hydroxybutyl vinyl ether, tri-ethylene glycol di-vinyl ether, hydroxybutyl vinyl ether iso-phthalate and 1,4-cyclohexane dimethanol di-vinyl ether glutarate ester.

The photoinitiator should be capable of producing free radicals upon irradiation by ultraviolet light. A wide variety of photoinitiators can be used for the purpose, for example benzophenones, benzoin, benzoin ethyl ether, benzoin methyl ether, acyl phosphine oxides, and thioxanthone derivatives. The amount of photoinitiator present will usually be from 2 to 20 percent based on the total amount of polymerisable material in the compositions. Some latitude is generally allowed to compensate for pigment blocking effects.

Varnishes, lacquers or inks of the present invention preferably further include a polymer and/or copolymer of an ethylenically unsaturated monomer. Such polymers and copolymers in general serve to increase the adhesion of ink applied to the cured compositions. When present, it is generally preferred to include from 5 to 35 percent by weight of a polymer and/ or copolymer based on the weight of the photopolymerisable binder. Preferred polymers and copolymers contain units derived from alkyl acrylates or methacrylates, for example methyl methacrylate, ethyl methacrylate and butyl methacrylate. Examples of commercially available materials which can be used for the purpose are sold under the Trade Mark Elvacite.

Varnishes, lacquers or inks in accordance with the invention preferably include a colorant, for example a pigment, and they are of particular value in the form of inks, for screen printing. Colorants, when present, will usually be present in an amount of from 1 to 30 percent by weight of the varnishes, lacquers or ink.

Other materials which may be present in varnishes, lacquers or inks of the present invention include flow controllers, for example polybutyl acrylate (e.g. Modaflow (Trade Mark) - ex Monsanto), silicone fluids, for example as 100% solutions of poly(methyl siloxanes) (e.g. F111/100 (Trade Mark) - ex ICI), and materials known for modifying the rheological properties of ink formulations, typically in the amounts used in such formulations, for example fumed silica (e.g. Cab-o-Sil M5 (Trade Mark) - ex Cabot), magnesium silicate (e.g. Mistron Monomix (Trade Mark) - ex Sturge Chemicals) and calcium carbonate (e.g. Calopake H (Trade Mark) - ex Cyprus Chemicals).

Varnishes, lacquers or inks of the present invention will generally be used and cured by applying the composition to a substrate, and thereafter exposing the composition to a source of ultraviolet radiation to cure and harden the compositions.

The present invention has been found of particular value in forming screen printed decorations on containers made of polyolefins, without the release of harmful solvents or monomers, whilst retaining desirable properties normally associated with compositions containing N-vinyl-2-pyrrolidone or a solvent.

The following Examples are given by way of illustration only All parts are percentages by weight of the total composition unless stated otherwise.

### Example 1

A varnish was prepared by mixing the following ingredients:-

| | |
|---|---|
| bis-Phenol A type aromatic epoxy acrylate | 40 parts |
| iso-Bornyl acrylate | 12 parts |
| tri-Propylene glycol diacrylate | 12 parts |
| 1,4-cyclohexane dimethanol di-vinyl ether | 6 parts |
| Photoinitiator | 10 parts |
| Levelling agent (F111/1000) | 2 parts |
| Acrylic resin (Elvacite 201 (Trade Mark) - Du-Pont) | 18 parts. |

A pigment paste was also prepared by mixing 6.6 parts of Pigment Red 2 with 11.4 parts of the aromatic epoxy acrylate using a high speed stirrer followed by roll grinding.

The varnish and the pigment paste were then mixed using a high speed stirrer to produce an ink which was printed by screen printing on to a previously gas/air flame treated polyolefin container using a polyurethane squeegee and an automatic Dubuit (Trade Mark) bottle printer with a 180 threads/cm mesh screen. The print was cured by exposure for one second to ultraviolet light from an 80 W/cm medium pressure mercury vapor lamp, the spectral output of this lamp being predominantly at wavelengths of 284 and 365nm. The cured print was assessed by thumbnail scratching and scotch tape pull away tests immediately after cure, and by immersion in ethanol, 10 percent aqueous sodium hydroxide, household bleach, water, and domestic detergent. The results of the tests are given in the accompanying Table.

### Example 2

A varnish was prepared as described in Example 1 by mixing together the following ingredients:-

| | |
|---|---|
| bis-Phenol A type aromatic epoxy acrylate | 40 parts |
| iso-Bornyl acrylate | 12 parts |
| tri-Propylene glycol diacrylate | 12 parts |
| tri-Propylene glycol di-vinyl ether | 6 parts |
| Photoinitiator | 10 parts |
| Levelling agent (F111/1000) | 2 parts |
| Acrylic resin (Elvacite 2013) | 18 parts. |

This varnish was mixed with 18 parts of the pigment paste prepared as described in Example 1, and the resulting ink was printed and cured as described in Example 1. The results of the tests described in Example 1 are given in the accompanying Table.

### Example 3

A varnish was prepared as described in Example I by mixing together the following ingredients:-

| | |
|---|---|
| bis-Phenol A type aromatic epoxy acrylate | 40 parts |
| iso-Bornyl acrylate | 12 parts |
| tri-Propylene glycol diacrylate | 12 parts |
| Hydroxybutyl vinyl ether | 6 parts |
| Photoinitiator | 10 parts |
| Levelling agent (F111/1000) | 2 parts |
| Acrylic resin (Elvacite 2013) | 18 parts. |

This varnish was mixed with 18 parts of the pigment paste prepared as described in Example 1, and the resulting ink was printed and cured as described in Example 1. The results of the tests described in Example 1 are given in the accompanying Table.

### Example 4

A varnish was prepared as described in Example 1 by mixing together the following ingredients:-

| | |
|---|---|
| bis-Phenol A type aromatic epoxy acrylate | 40 parts |
| iso-Bornyl acrylate | 12 parts |
| tri-Propylene glycol diacrylate | 12 parts |
| 1,4 cyclohexane dimethanol di-vinyl ether glutarate ester | 6 parts |
| Photoinitiator | 10 parts |
| Levelling agent (F111/1000) | 2 parts |
| Acrylic resin (Elvacite 2013) | 18 parts. |

This varnish was mixed with 18 parts of the pigment paste prepared as described in Example 1, and the resulting ink was printed and cured as described in Example 1. The results of the tests described in Example 1 are given in the accompanying Table.

### Example 5 (comparison)

A varnish was prepared as described in Example 1 by mixing together the following ingredients:-

| | |
|---|---|
| bis-Phenol A type aromatic epoxy acrylate | 40 parts |
| iso-Bornyl acrylate | 12 parts |
| tri-Propylene glycol diacrylate | 12 parts |
| N-vinyl-2-pyrrolidone | 6 parts |
| Photoinitiator | 10 parts |
| Levelling agent (F111/1000) | 2 parts |
| Acrylic resin (Elvacite 2013) | 18 parts. |

This varnish was mixed with 18 parts of the pigment paste prepared as described in Example 1, and the resulting ink was printed and cured as described in Example 1.

The results of the tests described in Example 1 are given in the accompanying Table. In the Table, the properties are given on a scale of 1 to 5, 5 representing excellent properties and 1 poor properties.

**Table**

| Example | Degree of cure | Resistance to | | | | | |
|---|---|---|---|---|---|---|---|
| | | Scotch tape test | Bleach | Water | Detergent | Caustic | Ethanol |
| 1 | 4 | 3 | 4 | 3 | 3 | 3 | 3 |
| 2 | 5 | 5 | 5 | 5 | 5 | 5 | 4 |
| 3 | 5 | 5 | 5 | 5 | 5 | 5 | 4 |
| 4 | 4 | 5 | 4 | 4 | 5 | 5 | 5 |
| 5 | 5 | 5 | 5 | 4 | 5 | 5 | 5 |

The compositions of Examples 2, 3 and 4 were substantially equivalent or superior to that of Example 5 which contained N-vinyl-2-pyrrolidone.

## Claims

1. A photocurable varnish, lacquer or ink comprising:
(a) a photopolymerisable binder comprising a polymerisable epoxy acrylate, a mono- or multi-functional acrylate monomer, and from 3-30% by weight of the photopolymerisable binder of a vinyl ether monomer; and
(b) a free radical photoinitiator;
with the proviso that the photocurable varnish, lacquer or ink does not include methyldiethanolamine.

2. A photocurable varnish, lacquer or ink according to claim 1, wherein the multi-functional acrylate monomer is a di-functional acrylate monomer.

3. A photocurable varnish, lacquer or ink according to claims 1 or 2, wherein the photopolymerisable binder represents from 30 to 70 percent by weight of the photocurable varnish, lacquer or ink.

4. A photocurable varnish, lacquer or ink according to any one of the preceding claims, wherein the photocurable varnish, lacquer or ink contains from 2 to 20 percent by weight of free radical photoinitiator based on the total weight of polymerisable materials in the photocurable varnish, lacquer or ink.

5. A photocurable varnish, lacquer or ink according to any one of the preceding claims, including a polymer and/or a copolymer of an ethylenically unsaturated monomer.

6. A photocurable varnish, lacquer or ink according to any one of the preceding claims, including a colorant.

7. A photocurable varnish, lacquer or ink according to claim 6, wherein the colorant is present in an amount of from 1 to 30 percent by weight of the photocurable varnish, lacquer or ink.

8. A method of forming a photocured coating on a substrate, the method comprising applying the photocurable varnish, lacquer or ink according to any of the preceding claims on to the substrate, and thereafter exposing the photocurable varnish, lacquer or ink to ultraviolet light to effect free radical curing of the photocurable varnish, lacquer or ink.

9. A method according to claim 8, wherein the substrate comprises a polyolefin.

## Patentansprüche

1. Lichthärtbare(r) Lack oder Farbe, umfassend:
(a) ein photopolymerisierbares Bindemittel, umfassend ein polymerisierbares Epoxidacrylat, ein mono- oder multifunktionelles Acrylatmonomer und zwischen 3 und 30 Gew.-% des photopolymerisierbaren Bindemittels eines Vinylethermonomers; und
(b) einen frei radikalischen Photoinitiator; unter der Bedingung, dass die/der lichthärtbare Lack
oder Farbe nicht Methyldiethanolamin enthält.

2. Lichthärtbare(r) Lack oder Farbe nach Anspruch 1, wobei das multifunktionelle Acrylatmonomer ein difunktionelles Acrylatmonomer ist.

3. Lichthärtbare(r) Lack oder Farbe nach Anspruch 1 oder 2, wobei das photopolymerisierbare Bindemittel zwischen 30 und 70 Gew.-% der/des lichthärtbaren Lacks oder Farbe ausmacht.

4. Lichthärtbare(r) Lack oder Farbe nach einem der vorherigen Ansprüche, wobei die/der lichthärtbare Lack oder Farbe zwischen 2 und 20 Gew.-% an frei radikalischem Photoinitiator auf der Basis des Gesamtgewichts der polymerisierbaren Materialien in der/dem lichthärtbaren Lack oder Farbe enthält

5. Lichthärtbare(r) Lack oder Farbe nach einem der vorherigen Ansprüche, umfassend ein Polymer und/oder ein Copolymer eines ethylenisch ungesättigten Monomers.

6. Lichthärtbare(r) Lack oder Farbe nach einem der vorherigen Ansprüche, umfassend einen Farbstoff.

7. Lichthärtbare(r) Lack oder Farbe nach Anspruch 6, wobei der Farbstoff in einer Menge zwischen 1 und 30 Gew.-% der/des lichthärtbaren Lacks oder Farbe vorhanden ist.

8. Verfahren zum Bilden einer lichtgehärteten Beschichtung auf einem Substrat, umfassend das Aufbringen der/des lichthärtbaren Lacks oder Farbe gemäß einem der vorherigen Ansprüche auf das Substrat und anschließend Aussetzen der/des lichthärtbaren Lacks oder Farbe der Wirkung von UV-Licht, um frei radikalisches Härten der/des lichthärtbaren Lacks oder Farbe zu bewirken.

9. Verfahren nach Anspruch 8, wobei das Substrat ein Polyolefin umfasst.

## Revendications

1. Vernis, laque ou encre photodurcissable comprenant :
(a) un liant photopolymérisable comprenant un acrylate d'époxy polymérisable, un monomère à mono- ou multifonction acrylate, et de 3 à 30% en poids du liant photopolymérisable d'un monomère d'éther vinylique ; et
(b) un photo-initiateur radicalaire ;
avec la condition que le vernis, la laque ou l'encre photodurcissable ne comporte pas de méthyldiéthanolamine.

2. Vernis, laque ou encre photodurcissable selon la revendication 1, dans le ou laquelle le monomère à multifonction acrylate est un monomère à difonction acrylate.

3. Vernis, laque ou encre photodurcissable selon la revendication 1 ou 2, dans le ou laquelle le liant photopolymérisable représente de 30 à 70 pour cent en poids du vernis, de la laque ou de l'encre photodurcissable.

4. Vernis, laque ou encre photodurcissable selon l'une quelconque des revendications précédentes, dans le ou laquelle le vernis, la laque ou l'encre photodurcissable, contient de 2 à 20 pour cent en poids de photo-initiateur radicalaire sur la base du poids total de matériaux polymérisables dans le vernis, la laque ou l'encre photodurcissable.

5. Vernis, laque ou encre photodurcissable selon l'une quelconque des revendications précédentes, comportant un polymère et/ou un copolymère d'un monomère éthylèniquement insaturé.

6. Vernis, laque ou encre photodurcissable selon l'une quelconque des revendications précédentes, comportant un colorant.

7. Vernis, laque ou encre photodurcissable selon la revendication 6, dans le ou laquelle le colorant est présent en une quantité de 1 à 30 pour cent en poids du vernis, de la laque ou de l'encre photodurcissable.

8. Méthode de formation d'un revêtement photodurci sur un substrat, la méthode comprenant l'application du vernis, de la laque ou de l'encre photodurcissable selon l'une quelconque des revendications précédentes sur le substrat, et ensuite l'exposition du vernis, de la laque ou de l'encre photodurcissable à une lumière ultraviolette pour effectuer le durcissement radicalaire du vernis, de la laque ou de l'encre photodurcissable.

9. Méthode selon la revendication 8, dans laquelle le substrat comprend une polyoléfine.
